# EUROPEAN PATENT APPLICATION

(11) **EP 4 044 615 A1**
(43) Date of publication of application: **17.08.2022**
(21) Application number: 20883609.8
(22) Date of filing: 23.06.2020
(51) Int. Cl.: H04N 21/647, H04N 7/14, H04L 29/06

(54) **METHOD AND DEVICE FOR ADJUSTING ATTRIBUTE OF VIDEO STREAM**

(30) Priority: 31.10.2019 CN 201911054917
(71) Applicant: Huawei Technologies Co., Ltd., Longgang District Shenzhen, Guangdong 518129 (CN)
(72) Inventor: ZHUANG, Songhai, Shenzhen, Guangdong 518129 (CN)
(74) Representative: Epping - Hermann - Fischer
(86) International application number: PCT/CN2020/097754
(87) International publication number: WO 2021/082479

(57) **Abstract**

This application relates to the field of communications technologies, and discloses a method and an apparatus for adjusting an attribute of a video stream, to help the video stream adapt to a change of network bandwidth, so as to reduce a network packet loss. The method includes: An attribute adjustment apparatus determines a scenario of a first conference site based on image content of a first video stream of the first conference site. The attribute adjustment apparatus determines target attribute information of the first video stream based on a packet loss rate of the first video stream and the scenario of the first conference site. The target attribute information includes at least one of target resolution and a target frame rate. The attribute adjustment apparatus adjusts attribute information of the first video stream to the target attribute information.

## Description

### TECHNICAL FIELD

This application relates to the field of communications technologies, and in particular, to a method and an apparatus for adjusting an attribute of a video stream.

### BACKGROUND

Videoconferencing enables users who communicate with each other at different places to hear voices and see images of each other, thereby enhancing a sense of reality, a sense of intimacy, and a sense of immediacy of communication. Videoconferencing can be used in military, political, economic, educational, sanitary, and other fields.

In a video conference, a terminal participating in the video conference collects conference site information (such as a voice, an image, and data), and converts the information into a video stream for transmission. The video stream is transmitted based on an internet protocol (internet protocol, IP). A plurality of video streams may be simultaneously transmitted on an IP line, and the plurality of video streams occupy network bandwidth. Consequently, a network packet loss may occur in a current video stream. Therefore, how to adjust an attribute of a video stream to adapt to a change of network bandwidth, so as to reduce a network packet loss becomes a technical problem to be urgently resolved.

### SUMMARY

Embodiments of this application provide a method and an apparatus for adjusting an attribute of a video stream, to help the video stream adapt to a change of network bandwidth, so as to reduce a network packet loss.

To achieve the foregoing objective, the following technical solutions are specifically provided:
According to a first aspect, a method for adjusting an attribute of a video stream is provided, including: An attribute adjustment apparatus determines a scenario of a first conference site based on image content of a first video stream of the first conference site. Then, the attribute adjustment apparatus determines target attribute information of the first video stream based on a packet loss rate of the first video stream and the scenario of the first conference site. The target attribute information includes at least one of target resolution and a target frame rate. Then, the attribute adjustment apparatus adjusts attribute information of the first video stream to the target attribute information. In this technical solution, bandwidth of a video stream is adjusted based on a scenario of a conference site and target resolution and/or a target frame rate of the video stream of the conference site. Because resolution and/or a frame rate of a video stream affects bandwidth of the video stream, the technical solution helps the video stream adapt to a change of network bandwidth, so as to reduce a network packet loss.

In a possible design, the attribute adjustment apparatus includes: a terminal at the first conference site, or a terminal at another conference site except the first conference site, or an MCU, or another apparatus except terminals participating in a video conference and an MCU communicating with the terminals.

In a possible design, the first video stream may be a primary stream, a secondary stream, or the like of the first conference site.

In a possible design, that the attribute adjustment apparatus adjusts attribute information of the first video stream to the target attribute information may include: When the attribute adjustment apparatus is the terminal at the first conference site, the attribute adjustment apparatus adjusts the attribute information of the first video stream to the target attribute information.

In a possible design, that the attribute adjustment apparatus adjusts attribute information of the first video stream to the target attribute information may include: When the attribute adjustment apparatus is a device other than the terminal at the first conference site (for example, a terminal or an MCU at another conference site), the attribute adjustment apparatus sends the target attribute information to the terminal at the first conference site. The target attribute information is used to indicate the terminal to send the first video stream based on the target attribute information.

In a possible design, that an attribute adjustment apparatus determines a scenario of a first conference site based on image content of a first video stream of the first conference site includes: The attribute adjustment apparatus determines the scenario of the first conference site based on the image content of the first video stream and a scenario model. The scenario model is used to represent a correspondence between image content of a video stream and a scenario to which the video stream belongs. In this way, the scenario of the first conference site is determined by using the scenario model, which is easy to implement. Certainly, during specific implementation, the scenario of the first conference site may also be determined by using another method.

In a possible design, the method further includes: The attribute adjustment apparatus obtains an image of a video stream in at least one candidate scenario. The attribute adjustment apparatus trains the image of the video stream in the at least one candidate scenario to obtain the scenario model. The at least one candidate scenario includes the scenario of the first conference site. This possible design provides an example of obtaining the scenario model.

In a possible design, that the attribute adjustment apparatus determines target attribute information of the first video stream based on a packet loss rate of the first video stream and the scenario of the first conference site includes: When the packet loss rate of the first video stream is greater than or equal to (for example, greater than, or greater than or equal to) a first preset threshold, the attribute adjustment apparatus determines the target attribute information of the first video stream based on the scenario of the first conference site. For example, when the packet loss rate of the first video stream is greater than or equal to (for example, greater than, equal to, or greater than or equal to) the first preset threshold, the attribute adjustment apparatus determines to reduce bandwidth of the first video stream.

In a possible design, that the attribute adjustment apparatus determines the target attribute information of the first video stream based on the scenario of the first conference site includes:
When the scenario of the first conference site is a fixed conference room scenario, the attribute adjustment apparatus decreases current resolution of the first video stream to obtain the target resolution, and decreases a current frame rate of the first video stream to obtain the target frame rate. This technical solution is proposed in consideration of that "In the fixed conference room scenario, an object in image content of a video stream is generally an object with a small motion amount, and therefore, reducing smoothness of the video stream and definition of the image content of the video stream usually has no or very little impact on user experience".

Alternatively, when the scenario of the first conference site is an outdoor scenario, the attribute adjustment apparatus decreases current resolution of the first video stream to obtain the target resolution, and uses a current frame rate of the first video stream as the target frame rate. This technical solution is proposed in consideration of that "In the outdoor scenario, an object in image content of a video stream is generally an object with a large motion amount, and compared with definition of the image content of the video stream, smoothness of the video stream is preferentially ensured, so that user experience can be improved".

Alternatively, when the scenario of the first conference site is a PC desktop scenario, the attribute adjustment apparatus decreases a current frame rate of the first video stream to obtain the target frame rate, and uses current resolution of the first video stream as the target resolution. This technical solution is proposed in consideration of that "In the PC desktop scenario, compared with smoothness of a video stream, definition of image content of the video stream is preferentially ensured, so that user experience can be improved".

Alternatively, when the scenario of the first conference site is a mobile scenario, the attribute adjustment apparatus uses current resolution of the first video stream as the target resolution, and uses a current frame rate of the first video stream as the target frame rate. This technical solution is proposed in consideration of that "In the mobile scenario, smoothness of a video stream and definition of image content of the video stream are preferentially ensured".

For example, the current resolution of the first video stream is resolution of the first video stream when the determining the target attribute of the first video stream is performed, and the current frame rate of the first video stream is a frame rate of the first video stream when the determining the target attribute of the first video stream is performed.

In a possible design, that the attribute adjustment apparatus determines target attribute information of the first video stream based on a packet loss rate of the first video stream and the scenario of the first conference site includes: When the packet loss rate of the first video stream is less than or equal to (for example, less than, equal to, or less than or equal to) a second preset threshold, the attribute adjustment apparatus determines the target attribute information of the first video stream based on the scenario of the first conference site. For example, when the packet loss rate of the first video stream is less than or equal to (for example, less than, equal to, or less than or equal to) the second preset threshold, the attribute adjustment apparatus determines to reduce bandwidth of the first video stream.

In a possible design, that the attribute adjustment apparatus determines the target attribute information of the first video stream based on the scenario of the first conference site includes: When the scenario of the first conference site is a fixed conference room scenario, the attribute adjustment apparatus increases current resolution of the first video stream to obtain the target resolution, and decreases a current frame rate of the first video stream to obtain the target frame rate. Alternatively, when the scenario of the first conference site is an outdoor scenario, the attribute adjustment apparatus increases current resolution of the first video stream to obtain the target resolution, and uses a current frame rate of the first video stream as the target frame rate. Alternatively, when the scenario of the first conference site is a PC desktop scenario, the attribute adjustment apparatus increases a current frame rate of the first video stream to obtain the target frame rate, and uses current resolution of the first video stream as the target resolution. Alternatively, when the scenario of the first conference site is a mobile scenario, the attribute adjustment apparatus uses current resolution of the first video stream as the target resolution, and uses a current frame rate of the first video stream as the target frame rate.

According to a second aspect, an attribute adjustment apparatus is provided, configured to perform the method according to any one of the first aspect or the possible designs of the first aspect. The apparatus may be specifically an MCU, a terminal, a chip, or the like.

In a possible design, the apparatus includes modules configured to perform the method according to any one of the first aspect or the possible designs of the first aspect.

In another possible design, the apparatus includes a memory and a processor. The memory is configured to store computer instructions, and when the apparatus runs, the processor executes the computer instructions in the memory, to perform, by using a hardware resource in the apparatus, operation steps of the method according to any one of the first aspect or the possible designs of the first aspect.

According to a third aspect, a computer-readable storage medium is provided. The computer-readable storage medium stores computer instructions. When the computer instructions are run on a computer, the computer is enabled to perform operation steps of the method according to any one of the first aspect or the possible designs of the first aspect. According to a fourth aspect, a computer program product is provided. When the computer program product runs on a computer, operation steps of the method according to any one of the first aspect or the possible designs of the first aspect are performed.

It may be understood that any one of the apparatus, the computer-readable storage medium, or the computer program product provided above is configured to perform the corresponding method provided above. Therefore, for beneficial effects that can be achieved by any one of the apparatus, the computer-readable storage medium, or the computer program product, refer to beneficial effects in the corresponding method. Details are not described herein again.

### BRIEF DESCRIPTION OF DRAWINGS

FIG. 1 is a schematic architectural diagram of a conference television system applicable to an embodiment of this application;
FIG. 2 is a schematic diagram of the conference television system shown in FIG. 1 at a moment according to an embodiment of this application;
FIG. 3 is a schematic architectural diagram of another conference television system applicable to an embodiment of this application;
FIG. 4 is a schematic architectural diagram of still another conference television system applicable to an embodiment of this application;
FIG. 5 is a schematic diagram of a structure of a communications device according to an embodiment of this application;
FIG. 6 is a schematic flowchart of a method for obtaining a scenario model according to an embodiment of this application;
FIG. 7 is a schematic flowchart of a method for adjusting an attribute of a video stream according to an embodiment of this application;
FIG. 8A is a schematic interaction diagram of a method for adjusting an attribute of a video stream according to an embodiment of this application;
FIG. 8B is a schematic interaction diagram of another method for adjusting an attribute of a video stream according to an embodiment of this application;
FIG. 9A is a schematic interaction diagram of still another method for adjusting an attribute of a video stream according to an embodiment of this application;
FIG. 9B is a schematic interaction diagram of yet another method for adjusting an attribute of a video stream according to an embodiment of this application;
FIG. 9C is a schematic interaction diagram of still yet another method for adjusting an attribute of a video stream according to an embodiment of this application;
FIG. 9D is a schematic interaction diagram of a further method for adjusting an attribute of a video stream according to an embodiment of this application;
FIG. 10A is a schematic interaction diagram of a still further method for adjusting an attribute of a video stream according to an embodiment of this application;
FIG. 10B is a schematic interaction diagram of a yet further method for adjusting an attribute of a video stream according to an embodiment of this application; and
FIG. 11 is a schematic diagram of a structure of an attribute adjustment apparatus according to an embodiment of this application.

### DESCRIPTION OF EMBODIMENTS

Currently, an intelligent speed regulation (intelligent speed regulation, IRC) technology is usually used to adjust actual bandwidth of a video stream. Specifically, when bandwidth that can be occupied by a video stream of a current conference site is decreased (for example, the bandwidth that can be occupied by the video stream of the current conference site is decreased because a video stream of another conference site occupies network bandwidth), actual bandwidth of the video stream of the current conference site is decreased, to reduce a packet loss rate of the video stream of the current conference site. When the bandwidth that can be occupied by the video stream of the current conference site is increased (for example, the bandwidth that can be occupied by the video stream of the current conference site is increased because bandwidth occupied by the video stream of the another conference site is decreased), the actual bandwidth of the video stream of the current conference site is increased, to maximize the utilization of network resources, so that quality of the video stream of the current conference site achieves a better effect.

In the foregoing IRC technology, it is only given that the actual bandwidth of the video stream of the current conference site is adjusted when the bandwidth that can be occupied by the video stream of the current conference site changes, but no specific adjustment solution is given. Therefore, the quality of the video stream of the current conference site cannot achieve a better effect. In view of this, an embodiment of this application provides a method and an apparatus for adjusting an attribute of a video stream. Details are as follows.

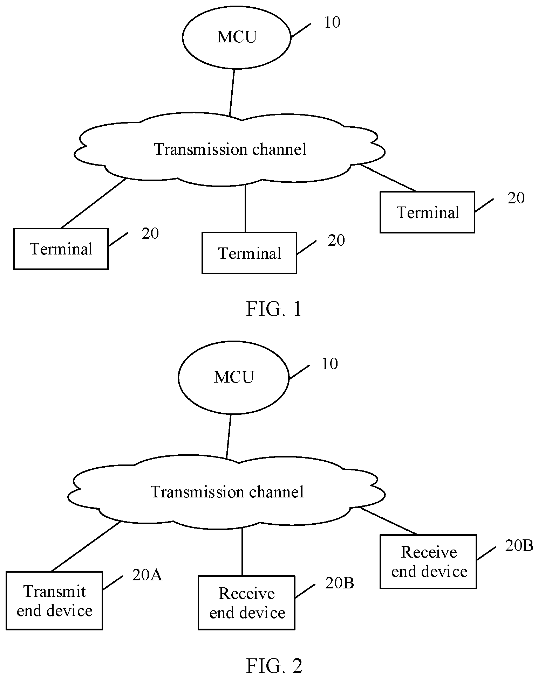

FIG. 1 is a schematic architectural diagram of a conference television system applicable to this embodiment of this application. The conference television system supports a video conference. The conference television system shown in FIG. 1 includes a multipoint control unit (multipoint control unit, MCU) 10 and at least two terminals 20 that access a conference. Each terminal 20 is connected to the MCU 10 through a transmission channel.

The MCU 10 may be referred to as a video conference exchange platform, and is a control center of the conference television system. The terminal 20 may be connected to the MCU 10 through a standard interface. The MCU 10 may implement functions such as exchange and mixing of images and voices and controlling on the terminal 20 according to protocols such as international standards H.221, H.242, H.243 or T. 120. In terms of logical functions, as an example, the MCU 10 may include a host and an operation console. The host is configured to complete a related function stipulated in the foregoing protocol. The operation console is configured to provide operation control and a humanmachine interface for the running of the host. The operation console can be used to perform various operations on the host and issue commands. Optionally, the MCU 10 may further include a service console, configured to implement functions such as external conference registration, reservation, and charging.

The terminal 20 may be referred to as a conference television terminal, and generally may be directly operated by a user, and is configured to provide an input/output of a signal such as an image, a voice, and data. Specifically, the terminal 20 may be configured to: collect live video information of a conference site, such as an image signal, a voice signal, and a related data signal, convert the collected signal into a video stream, compress encode, and multiplex the video stream, and send the video stream to the MCU 10; classify, decode, and restore the received video stream to one or more of the image signal, the voice signal, and the data signal; send a control signal (for example, a control signal for applying for the floor or mastership) to the MCU 10; and execute a control instruction (for example, a control instruction for indicating to mute) of the MCU 10 for the terminal 20. The terminal 20 may be a mobile phone, a notebook computer, a personal digital assistant (personal digital assistant, PDA), a handheld device having a communication function, a computing device, a processing device connected to a wireless modem, a vehicle mounted device, a wearable device, a camera, a monitor, or the like.

Each terminal 20 participating in the video conference may be used as a transmit end device 20A, or may be used as a receive end device 20B. The transmit end device 20A is configured to collect live video information of a conference site, convert a collected signal into a video stream, compress, encode, and multiplex the video stream, and send, through the MCU 10, the video stream to one or more (for example, all) receive end devices 20B participating in a video conference. The receive end device 20B is configured to: receive a video stream, and classify, decode, and restore the video stream. Based on this, in an implementation, at a moment, the conference television system shown in FIG. 1 may be shown in FIG. 2. The video stream may include one or more of a primary stream, a secondary stream, or data.

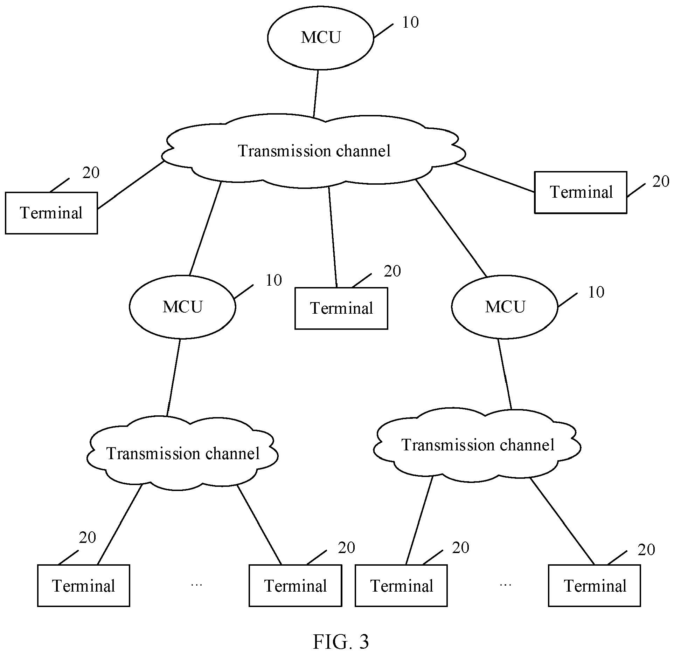

The conference television systems shown in FIG. 1 and FIG. 2 are merely examples, and do not constitute any limitation on a conference television system to which the technical solutions provided in embodiments of this application are applicable. For example, FIG. 3 is a schematic architectural diagram of another conference television system applicable to the technical solutions provided in embodiments of this application. In FIG. 3, one MCU 10 may be connected to one or more MCUs 10, and each MCU 10 may be connected to one or more terminals 20.

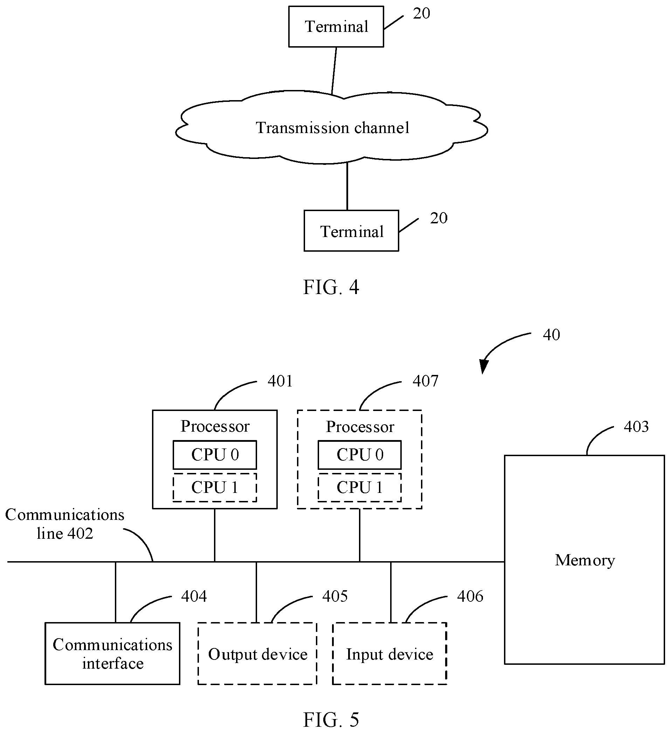

It may be understood that, when there are more than two terminals 20 accessing the conference, each terminal 20 generally needs to be controlled by using the MCU 10. When there are two terminals 20 accessing the conference, the conference television system may control the two terminals 20 by using the MCU 10, or may not control the two terminals 20 by using the MCU 10, but the two terminals 20 directly exchange information. FIG. 4 is a schematic architectural diagram of another conference television system applicable to the technical solutions provided in embodiments of this application. The conference television system includes two terminals 20 but does not include the MCU 10.

From the perspective of hardware, as an example, the MCU 10 and the terminal 20 in any one of the foregoing embodiments may be implemented by using a communications device 40 shown in FIG. 5. The communications device 40 may include at least one processor 401, a communications line 402, a memory 403, and at least one communications interface 404.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communications line 402 may include a channel for transmitting information between the foregoing components. The memory 403 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor through the communications line 402. The memory may alternatively be integrated with the processor. The memory provided in this embodiment of this application may usually be non-volatile. The memory 403 is configured to store computer-executable instructions for executing the solutions in this application, and the processor 401 controls execution. The processor 401 is configured to execute the computer-executable instructions stored in the memory 403, to implement methods provided in the following embodiments of this application.

The communications interface 404, which uses any type of apparatus such as a transceiver, is configured to communicate with another device or a communications network, such as the Ethernet, a RAN, and a wireless local area network (wireless local area network, WLAN).

Optionally, the computer-executable instructions in this embodiment of this application may also be referred to as application program code. This is not specifically limited in this embodiment of this application.

In specific implementation, when the communications device 40 is configured to implement the MCU 10, in an embodiment, the host, the operation console, and the service console may all be implemented by the processor 401 by executing the program code stored in the memory 403.

During specific implementation, in an embodiment, the processor 401 may include one or more CPUs, for example, a CPU 0 and a CPU 1 in FIG. 5.

During specific implementation, in an embodiment, the communications device 40 may include a plurality of processors, such as the processor 401 and a processor 407 in FIG. 5. Each of these processors may be a single-core (single-CPU) processor, or may be a multi-core (multi-CPU) processor. The processor herein may be one or more devices, circuits, and/or processing cores for processing data (for example, computer program instructions).

During specific implementation, in an embodiment, the communications device 40 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensor device.

During specific implementation, when the communications device 40 is configured to implement the terminal 20, in an embodiment, the output device 405 may include an audio output device, a video output device, and the like; and the input device 406 may include an audio input device, a video input device, and the like. Based on service requirements of different users, peripherals such as a sound console, a power amplifier, a large screen, and an electronic whiteboard may be further selected and equipped for the terminal 20.

The communications device 40 may be a general-purpose device or a dedicated device. During specific implementation, the communications device 40 may be a desktop computer, a portable computer, a network server, a palmtop computer (personal digital assistant, PDA), a mobile phone, a tablet computer, a wireless terminal device, an embedded device, or a device having a similar structure in FIG. 5. A type of the communications device 40 is not limited in this embodiment of this application.

The following explains some terms in embodiments of this application, to facilitate understanding of a reader.

### (1) Bandwidth, frame rate, and resolution

The bandwidth may also be referred to as a bit rate, and is an amount of information transmitted in unit time. For example, a unit of the bandwidth may be bit/s.

The frame rate is frame per second (frame per second, FPS). The frame rate affects image smoothness. Generally, a higher frame rate indicates smoother images, and a lower frame rate indicates more jittering images.

The resolution is a video graphics array (video graphics array, VGA), and is a quantity of pixels in a unit of inch. The resolution affects an image size. Generally, higher resolution indicates a larger image, and lower resolution indicates a smaller image.

A frame rate, resolution, and a compression rate of a video stream affect bandwidth of the video stream.

### (2) Conference site, and video stream of the conference site

The conference site is an environment in which a terminal participating in a video conference is located. Each terminal participating in the video conference corresponds to a conference site.

The video stream of the conference site refers to a video stream obtained by converting conference site information collected by a terminal in the conference site.

### (3) Scenario

The scenario is a conference site scenario, and may be distinguished based on image content of the video stream of the conference site. Image content with a same type of feature corresponds to a same type of scenario. A scenario division result may be predefined, and may be updated after being predefined.

In an example, the scenario may be classified into a personal computer (personal computer, PC) desktop scenario and a non-PC desktop scenario. Details are as follows:
In the PC desktop scenario, the image content of the video stream of the conference site is PC desktop information, such as a document, a shortcut, a folder, and an image displayed on a PC desktop.

In the non-PC desktop scenario, a terminal usually collects conference site information by using a camera, and the image content of the video stream of the conference site may include a person or an object (such as a table, a chair, or a tree) within a field of view of the camera.

In another example, the non-PC desktop scenario may be further subdivided. For example, the non-PC desktop scenario may be further subdivided into a fixed conference room scenario (that is, an indoor scenario), an outdoor scenario, and a mobile scenario. Details are as follows:
In the fixed conference room scenario, the image content of the video stream of the conference site is image information of an object (such as a person, a table, or a chair) in the conference room. For example, in the fixed conference room scenario, the image content of the video stream of the conference site is generally image information of an object with a relatively small motion amount, for example, image information of a person who changes a sitting posture.

In the outdoor scenario, the image content of the video stream of the conference site is image information of an outdoor object (such as a person, a tree, a building, or a vehicle). For example, in the outdoor scenario, the video stream of the conference site may be image information of an object with a relatively large motion amount, for example, a sports competition video or a person or a vehicle in driving.

In the mobile scenario, image content of a part of images of the video stream of the conference site is image information of an object in the conference room, and image content of another part of images is image information of an outdoor object.

It should be noted that the foregoing classification of the scenarios is merely an example. During actual implementation, the scenarios may be further classified into other types. This is not limited in this embodiment of this application.

### (4) Other terms

In embodiments of this application, the word "example", "for example", or the like is used to represent giving an example, an illustration, or a description. Any embodiment or design scheme described as an "example" or with "for example" in embodiments of this application should not be explained as being more preferred or having more advantages than another embodiment or design scheme. Specifically, use of the word such as "example" or "for example" is intended to present a related concept in a specific manner.

In embodiments of this application, "at least one" means one or more. "A plurality of' means two or more than two. The term "and/or" in embodiments of this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

With reference to the accompanying drawings, the following describes the technical solutions provided in embodiments of this application by using a training phase and an application phase.

### Training phase

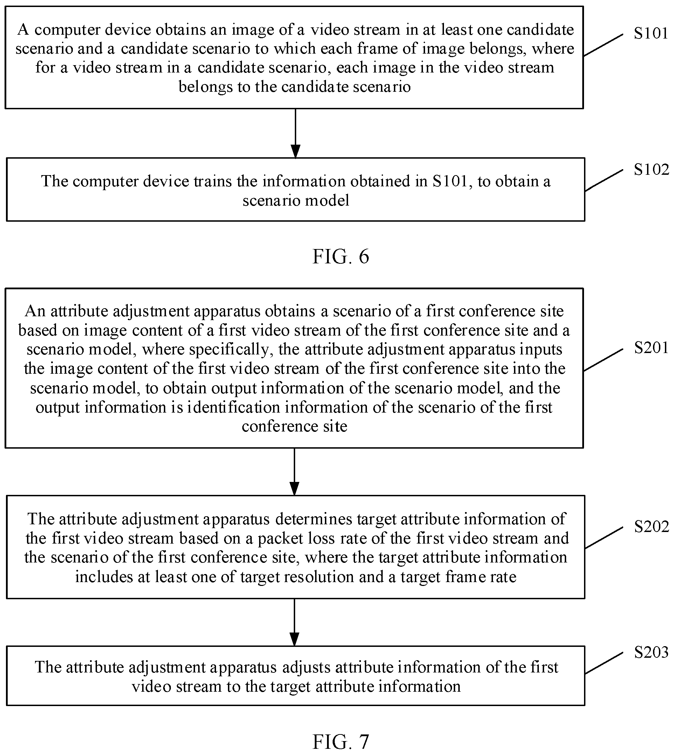

FIG. 6 is a schematic flowchart of a method for obtaining a scenario model according to an embodiment of this application. The method shown in FIG. 6 includes the following steps.

S101: A computer device obtains an image of a video stream in at least one candidate scenario, and a candidate scenario to which each frame of image belongs. For a video stream in a candidate scenario, each image in the video stream belongs to the candidate scenario.

The computer device in a training phase may be a terminal, an MCU, or another device. The candidate scenario may be predefined, for example, may include one or more of the foregoing PC desktop scenario, fixed conference room scenario, outdoor scenario, and mobile scenario. Certainly, another scenario may be further included.

S102: The computer device trains the information obtained in S101, to obtain a scenario model.

Input information of a training process includes a plurality of frames of images in each candidate scenario and an identifier of the candidate scenario.

An algorithm used in the training process includes a machine learning algorithm, for example, a neural network algorithm.

An objective of the training process is to determine, by identifying objects in a plurality of frames of images in a same candidate scenario, feature information of an image collected in the candidate scenario (that is, objects usually included in the image collected in the candidate scenario). For example, the obtained feature information of the image may include at least one of the following: feature information of a background in the image, feature information of a foreground in the image, feature information of a person in the image, feature information of a place of a person or an object in the image, and the like. Based on this, the computer device may obtain feature information of an image in each candidate scenario, to obtain the scenario model.

The scenario model is used to represent a correspondence between image content of a video stream and a scenario to which the video stream belongs. Input information of the scenario model may be the image content (for example, a name of an image or an object included in an image) of the video stream. Output information of the scenario model is identification information of the scenario to which the video stream belongs. As an example, the computer device may use binary numbers 00, 01, 10, and 11 to respectively represent identification information of the PC desktop scenario, the fixed conference room scenario, the outdoor scenario, and the mobile scenario.

The training process may be performed offline or online. This is not limited in this embodiment of this application. In addition, the scenario model may be updated.

### Application phase

FIG. 7 is a schematic flowchart of a method for adjusting an attribute of a video stream according to an embodiment of this application. The method shown in FIG. 7 includes the following steps.

S201: An attribute adjustment apparatus obtains a scenario of a first conference site based on image content of a first video stream of the first conference site and a scenario model. Specifically, the attribute adjustment apparatus inputs the image content of the first video stream of the first conference site into the scenario model, to obtain output information of the scenario model. The output information is identification information of the scenario of the first conference site.

The first conference site may be one of the conference sites corresponding to a video conference.

The attribute adjustment apparatus in the application phase may be a terminal, or an MCU, or a device other than the terminal and the MCU. The attribute adjustment apparatus in the application phase and the computer device in the training phase may be a same device or different devices. If the attribute adjustment apparatus in the application phase and the computer device in the training phase are different devices, the attribute adjustment apparatus may prestore a scenario model obtained through training by the computer device.

S202: The attribute adjustment apparatus determines target attribute information of the first video stream based on a packet loss rate (loss tolerance or packet loss rate) of the first video stream and the scenario of the first conference site. The target attribute information includes at least one of target resolution and a target frame rate.

In an implementation, if the packet loss rate of the first video stream is greater than (or greater than or equal to) a first preset threshold, the target attribute information of the first video stream is determined based on the scenario of the first conference site. The packet loss rate refers to a ratio of a quantity of lost data packets to a quantity of sent data packets. The first preset threshold is a maximum packet loss rate that can be accepted by a system. Details are as follows:
When the scenario of the first conference site is a fixed conference room scenario, the attribute adjustment apparatus decreases current resolution of the first video stream to obtain the target resolution, and decreases a current frame rate of the first video stream to obtain the target frame rate. This technical solution is proposed in consideration of that "In the fixed conference room scenario, an object in image content of a video stream is generally an object with a small motion amount (for example, a person who changes a sitting posture), and therefore, reducing smoothness of the video stream and definition of the image content of the video stream usually has no or very little impact on user experience".

When the scenario of the first conference site is an outdoor scenario, the attribute adjustment apparatus decreases current resolution of the first video stream to obtain the target resolution. Optionally, the attribute adjustment apparatus may keep the target frame rate the same as the current frame rate of the first video stream. This technical solution is proposed in consideration of that "In the outdoor scenario, an object in image content of a video stream is generally an object with a large motion amount (for example, a moving vehicle or a walking person), and compared with definition of the image content of the video stream, smoothness of the video stream is preferentially ensured, so that user experience can be improved".

When a target scenario is a PC desktop scenario, the attribute adjustment apparatus decreases a current frame rate of the first video stream to obtain the target frame rate. Optionally, the attribute adjustment apparatus may keep the target resolution the same as the current resolution of the first video stream. This technical solution is proposed in consideration of that "In the PC desktop scenario, compared with smoothness of a video stream, definition of image content (that is, desktop content) of the video stream is preferentially ensured, so that user experience canbe improved". When the target scenario is a mobile scenario, the attribute adjustment apparatus keeps the target frame rate the same as the current frame rate of the first video stream, and keeps the target resolution the same as the current resolution of the first video stream. This technical solution is proposed in consideration of that "In the mobile scenario, smoothness of a video stream and definition of image content of the video stream are preferentially ensured". In this case, bandwidth of the first video stream may be reduced by adjusting other attribute information of the first video stream, for example, increasing a coding compression rate.

Optionally, if the packet loss rate of the first video stream is greater than (or greater than or equal to) the first preset threshold, the bandwidth of the first video stream is reduced. The method for determining the target resolution in which "the target attribute information of the first video stream is determined based on the scenario of the first conference site" may be considered as a specific implementation of reducing the bandwidth of the first video stream. In another implementation, if the packet loss rate of the first video stream is less than (or less than or equal to) a second preset threshold, the bandwidth of the first video stream is increased. The first preset threshold is greater than or equal to the second preset threshold. Specific values of the first preset threshold and the second preset threshold and manners of setting the values of the first preset threshold and the second preset threshold are not limited in this embodiment of this application. Details are as follows:
When the target scenario is a conference room scenario, the attribute adjustment apparatus increases current resolution of the first video stream to obtain the target resolution, and increases a current frame rate of the first video stream to obtain the target frame rate.

When the scenario of the first conference site is an outdoor scenario, the attribute adjustment apparatus increases current resolution of the first video stream to obtain the target resolution. Optionally, the attribute adjustment apparatus may keep the target frame rate the same as the current frame rate of the first video stream.

When the scenario of the first conference site is a PC desktop scenario, the attribute adjustment apparatus increases a current frame rate of the first video stream to obtain the target frame rate. Optionally, the attribute adjustment apparatus may keep the target resolution the same as the current resolution of the first video stream.

When the scenario of the first conference site is a mobile scenario, the attribute adjustment apparatus keeps the target frame rate the same as the current frame rate of the first video stream, and keeps the target resolution the same as the current resolution of the first video stream.

Optionally, if the packet loss rate of the first video stream is less than (or less than or equal to) the second preset threshold, the bandwidth of the first video stream is increased. The methods for determining the target resolution in which "the target attribute information of the first video stream is determined based on the scenario of the first conference site" may be considered as specific implementations of increasing the bandwidth of the first video stream. It should be noted that the foregoing describes manners (or adjustment directions, that is, increase, decrease, or maintain) of adjusting resolution and a frame rate of the image in the first video stream in different target scenarios. Optionally, the attribute adjustment apparatus may determine a value of the target resolution and/or a value of the target frame rate with reference to a value of the packet loss rate. For example, when attribute information of the first video stream is fixed, a higher packet loss rate indicates a lower target frame rate and/or lower target resolution, and an objective of reducing the packet loss rate is achieved.

Optionally, the attribute adjustment apparatus may determine the value of the target resolution and/or the value of the target frame rate with reference to a scenario. For example, in the PC desktop scenario, the target resolution is greater than 1080 p (that is, a quantity of pixels per inch is 1080), and the target frame rate is less than 5 fps (that is, a quantity of frames transmitted per second is 5). For example, in the conference room scenario, the target resolution is greater than 720 p, and the frame rate is greater than 15 fps and less than 30 fps. For example, in the outdoor scenario such as a sports competition scenario, the target resolution is greater than 4000 p, and the target frame rate is greater than 60 fps. For example, in the mobile scenario, the target resolution is less than 360 p, and the frame rate is greater than 15 fps and less than 20 fps. Certainly, this application is not limited thereto in specific implementation.

Optionally, the attribute adjustment apparatus may further subdivide different scenarios in some or all of the foregoing distinguished scenarios. For example, the outdoor scenario is subdivided into a sports competition scenario, a road traffic scenario, and the like. Then, a value range of resolution and/or a value range of a frame rate allowed in each subdivided scenario are/is predefined, and a value of the target resolution and a value of the target frame rate in each subdivided scenario are/is determined based on the value range of the resolution and/or the value range of the frame rate allowed in each subdivided scenario.

In the foregoing manners, a manner of processing an image in the first video stream in this embodiment of this application is provided. A manner of processing a voice signal and a data signal in the first video stream is not limited in this embodiment of this application. For example, refer to the conventional technology.

S203: The attribute adjustment apparatus adjusts the attribute information of the first video stream to the target attribute information. For a specific implementation, refer to related descriptions in Embodiment 1 to Embodiment 8. In the technical solutions provided in embodiments of this application, the target attribute information of the first video stream is determined with reference to the scenario of the first conference site. In this way, the bandwidth of the first video stream can be adjusted. Compared with an existing IRC technology, bandwidth adjustment of a finer granularity is performed in different scenarios. This helps improve user experience.

The following specifically describes, from a perspective of an information exchange procedure, the technical solutions provided in embodiments of this application.

The technical solutions provided in embodiments of this application may be applied to a point-to-point conference or a multipoint conference. The point-to-point conference refers to a conference in which a quantity of terminals participating in the video conference is equal to 2. The multipoint conference refers to a conference in which a quantity of terminals participating in the video conference is greater than 2. In addition, the point-to-point conference or the multipoint conference may be a single-stream conference or a multi-stream conference (for example, a dual-stream conference). The single-stream conference refers to a conference that supports transmission of only one data stream at the same time. The multi-stream conference refers to a conference that supports transmission of two or more data streams at the same time. The dual-stream conference refers to a conference in which two data streams are transmitted at the same time.

It should be noted that, if the technical solution is applied to the multi-stream conference, each data stream in the multi-stream conference is used as the first video stream described above, to perform the following technical solutions provided in embodiments of this application.

With reference to the accompanying drawings, the following describes a method for adjusting an attribute of a video stream provided in embodiments of this application.

Embodiment 1 to Embodiment 6 may be applied to a conference television system in which terminals communicate with each other through an MCU, as shown in the conference television systems in FIG. 1 to FIG. 3. Embodiment 1 and Embodiment 2 describe a method for adjusting an attribute of a video stream in an uplink packet loss situation. The uplink packet loss situation herein refers to a packet loss situation that is of a received video stream sent by a transmit end device and that is determined by an MCU. Embodiment 3 to Embodiment 6 describe a method for adjusting an attribute of a video stream in a downlink packet loss situation. The downlink packet loss situation herein refers to a packet loss situation that is of a received video stream sent by an MCU and that is determined by a transmit end device. As an example, a packet loss rate may be used to represent a packet loss situation.

Embodiment 7 and Embodiment 8 may be applied to a conference television system in which terminals do not communicate with each other through an MCU, as shown in the conference television system in FIG. 4.

### Embodiment 1

This embodiment is described by using an example in which an MCU determines target attribute information in an uplink packet loss scenario.

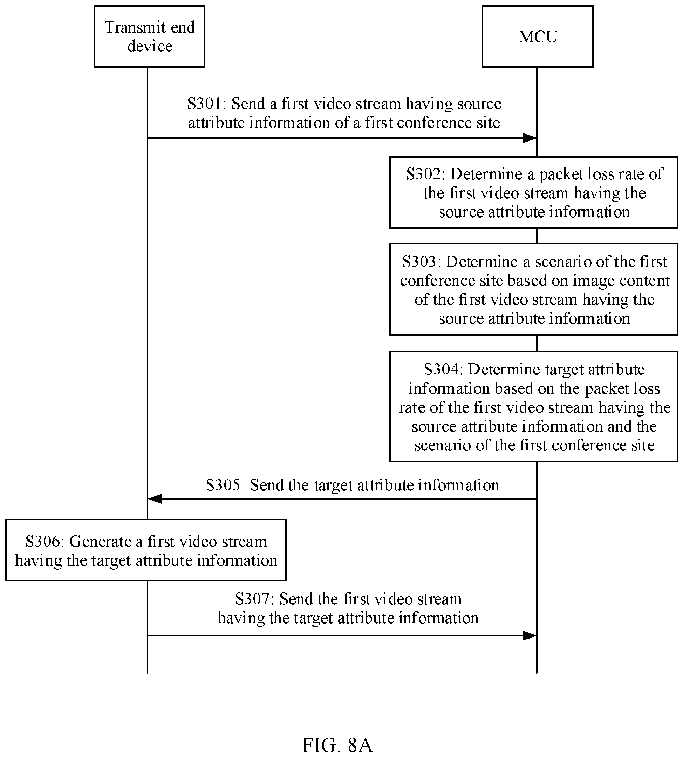

FIG. 8A is a schematic interaction diagram of a method for adjusting an attribute of a video stream according to an embodiment of this application. The method shown in FIG. 8A may include the following steps.

S301: A transmit end device sends a first video stream having source attribute information of a first conference site to an MCU. The transmit end device is a terminal at the first conference site. The source attribute information may be attribute information of the first video stream that is sent when this step is performed, and is not limited to specific attribute information, which is uniformly described herein. Explanations of source attribute information in other embodiments in the following are similar to this, and are not described again in the following.

S302: The MCU determines a packet loss rate of the received first video stream having the source attribute information. For a method for determining a packet loss rate in any embodiment of this application, refer to the conventional technology. This is described herein in a unified manner, and details are not described in the following again.

S303: The MCU determines a scenario of the first conference site based on image content of the first video stream having the source attribute information.

A sequence of performing S302 and S303 is not limited in this embodiment of this application. For example, S302 is performed before S303, or S303 is performed before S302, or S302 and S303 are performed at the same time.

For a method for determining the scenario of the first conference site based on image content of a video stream in any embodiment of this application, refer to S201. This is described herein in a unified manner, and details are not described in the following again.

S304: The MCU determines target attribute information based on the packet loss rate of the first video stream having the source attribute information and the scenario of the first conference site. The target attribute information may be understood as attribute information that is of a video stream sent by the transmit end device and that is expected by the MCU.

For a method for determining target attribute information based on a packet loss rate of a video stream and a scenario of a first conference site in any embodiment of this application, refer to S202. This is described herein in a unified manner, and details are not described in the following again.

S305: The MCU sends the target attribute information to the transmit end device.

S306: The transmit end device generates a first video stream having the target attribute information.

S307: The transmit end device sends the first video stream having the target attribute information to the MCU.

In this embodiment, the MCU determines the target attribute information. This helps reduce a computing amount of the transmit end device.

### Embodiment 2

This embodiment is described by using an example in which a transmit end device determines target attribute information in an uplink packet loss scenario.

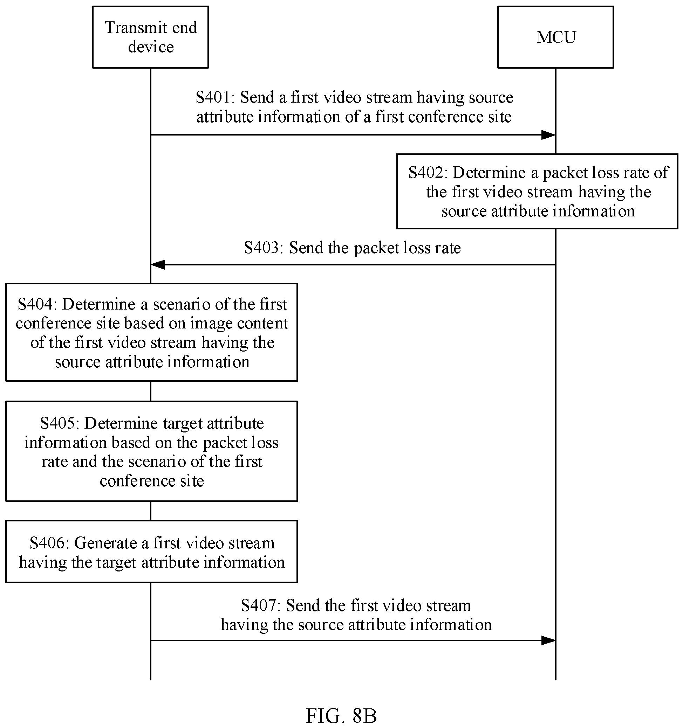

FIG. 8B is a schematic interaction diagram of a method for adjusting an attribute of a video stream according to an embodiment of this application. The method shown in FIG. 8B may include the following steps.

For S401 and S402, refer to S301 and S302.

S403: An MCU sends a packet loss rate of a first video stream having source attribute information to a transmit end device.

S404: The transmit end device determines a scenario of a first conference site based on image content of the first video stream having the source attribute information.

A sequence of performing S401 to S403 and S404 is not limited in this embodiment of this application. For example, S401 to S403 are performed before S404, or S404 is performed before S401 to S403, or S404 is performed in a process of performing S401 to S403.

S405: The transmit end device determines target attribute information based on the packet loss rate of the first video stream having the source attribute information and the scenario of the first conference site.

For S406 and S407, refer to S306 and S307.

In this embodiment, the transmit end device determines the target attribute information. This helps reduce a computing amount of the MCU.

### Embodiment 3

This embodiment is described by using an example in which an MCU determines target attribute information in a downlink packet loss scenario. In addition, the MCU has a forwarding function and a function of encoding and decoding (that is, converting) a video stream. Content of the video stream before and after the conversion is the same or substantially the same, but attribute information (for example, resolution and/or a frame rate) is different.

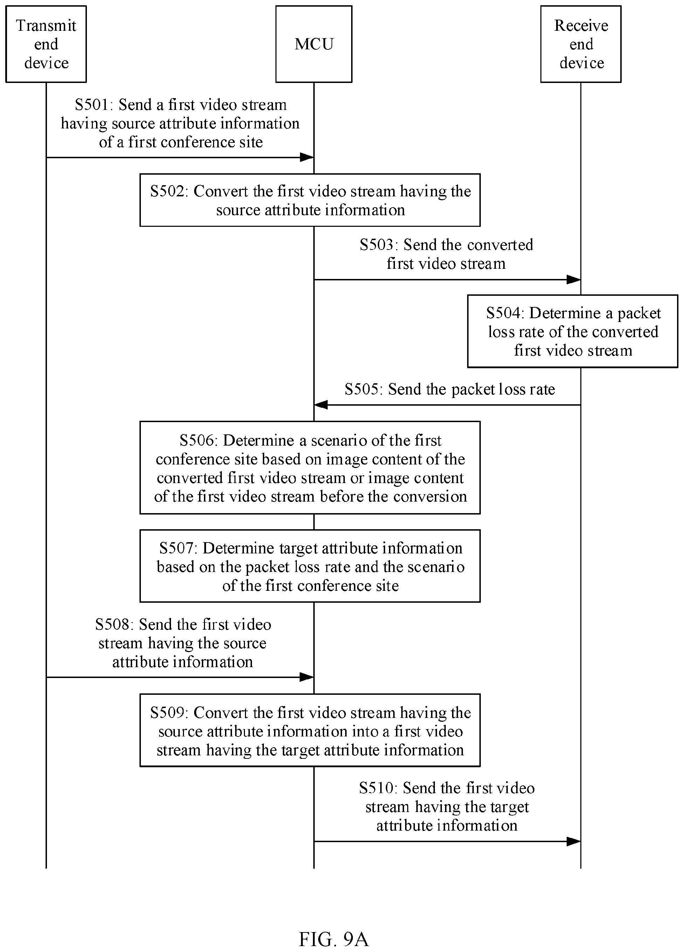

FIG. 9A is a schematic interaction diagram of a method for adjusting an attribute of a video stream according to an embodiment of this application. The method shown in FIG. 9A may include the following steps.

For S501, refer to S301.

S502: An MCU converts a first video stream having source attribute information. Attribute information of the first video stream before and after the conversion may be different.

S503: The MCU sends a converted first video stream to a receive end device.

S504: The receive end device determines a packet loss rate of the received converted first video stream.

S505: The receive end device sends the packet loss rate of the converted first video stream to the MCU.

S506: The MCU determines a scenario of a first conference site based on image content of the converted first video stream or image content of the first video stream before the conversion.

S507: The MCU determines target attribute information based on the packet loss rate of the converted first video stream and the scenario of the first conference site.

S508: The transmit end device sends the first video stream having the source attribute information to the MCU. S509: The MCU converts the first video stream having the source attribute information into a first video stream having the target attribute information.

S510: The MCU sends the first video stream having the target attribute information to the receive end device.

### Embodiment 4

This embodiment is described by using an example in which an MCU determines target attribute information in a downlink packet loss scenario. In addition, the MCU has a forwarding function, but does not have a function of encoding and decoding (that is, converting) a video stream.

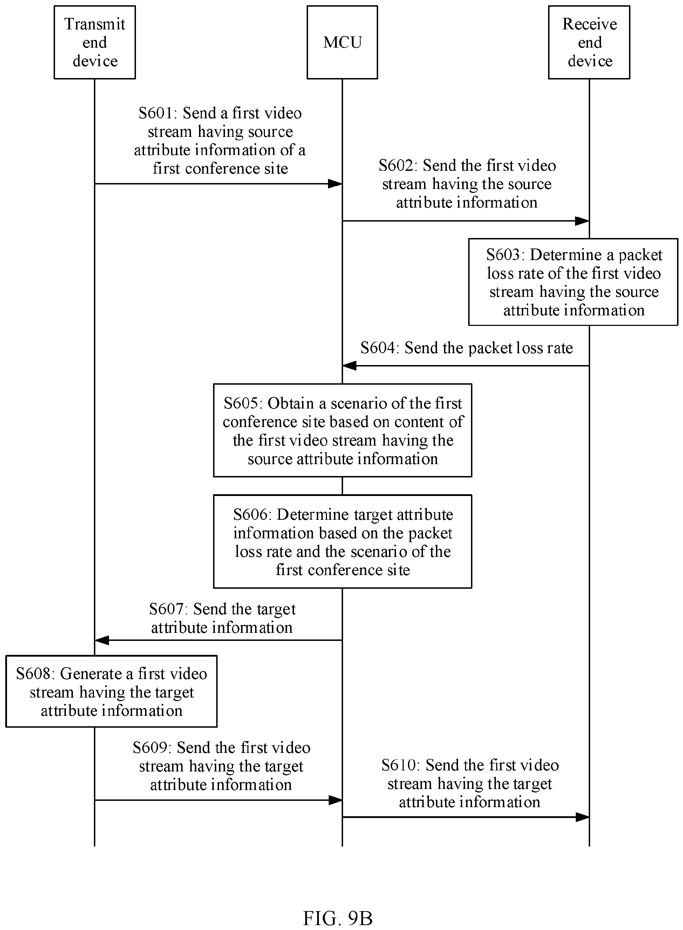

FIG. 9B is a schematic interaction diagram of a method for adjusting an attribute of a video stream according to an embodiment of this application. The method shown in FIG. 9B may include the following steps.

For S601, refer to S301.

S602: An MCU sends a first video stream having source attribute information to a receive end device.

S603: The receive end device determines a packet loss rate of the received first video stream having the source attribute information.

S604: The receive end device sends the packet loss rate of the first video stream having the source attribute information to the MCU.

S605: The MCU determines a scenario of a first conference site based on image content of the first video stream having the source attribute information.

S606: The MCU determines target attribute information based on the packet loss rate of the first video stream having the source attribute information and the scenario of the first conference site.

S607: The MCU sends the target attribute information to the transmit end device.

S608: The transmit end device sends a first video stream having the target attribute information to the MCU.

S609: The transmit end device sends the first video stream having the target attribute information to the MCU. S610: The MCU sends the first video stream having the target attribute information to the receive end device.

### Embodiment 5

This embodiment is described by using an example in which a receive end device determines target attribute information in a downlink packet loss scenario. In addition, an MCU has a forwarding function and a function of encoding and decoding (that is, converting) a video stream.

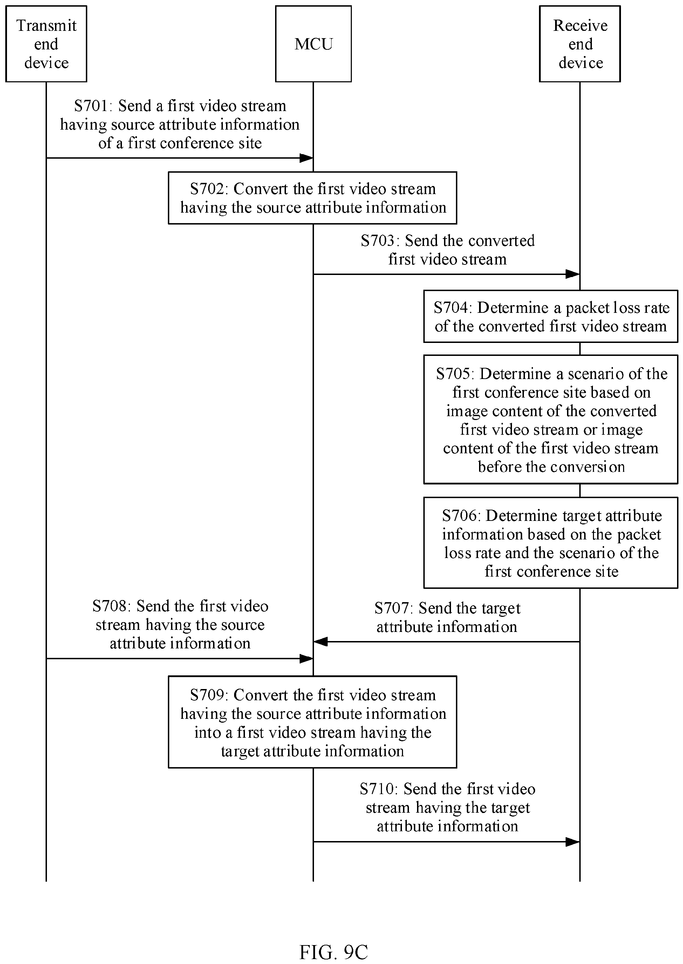

FIG. 9C is a schematic interaction diagram of a method for adjusting an attribute of a video stream according to an embodiment of this application. The method shown in FIG. 9C may include the following steps.

For S701 to S704, refer to S501 to S504.

S705: The receive end device determines a scenario of a first conference site based on image content of the converted first video stream or image content of the first video stream before the conversion.

S706: The receive end device determines target attribute information based on the packet loss rate of the converted first video stream and the scenario of the first conference site.

S707: The receive end device sends the target attribute information to an MCU.

For S708 to S710, refer to S508 to S510.

### Embodiment 6

This embodiment is described by using an example in which a receive end device determines target attribute information in a downlink packet loss scenario. In addition, an MCU has a forwarding function, but does not have a function of encoding and decoding (that is, converting) a video stream.

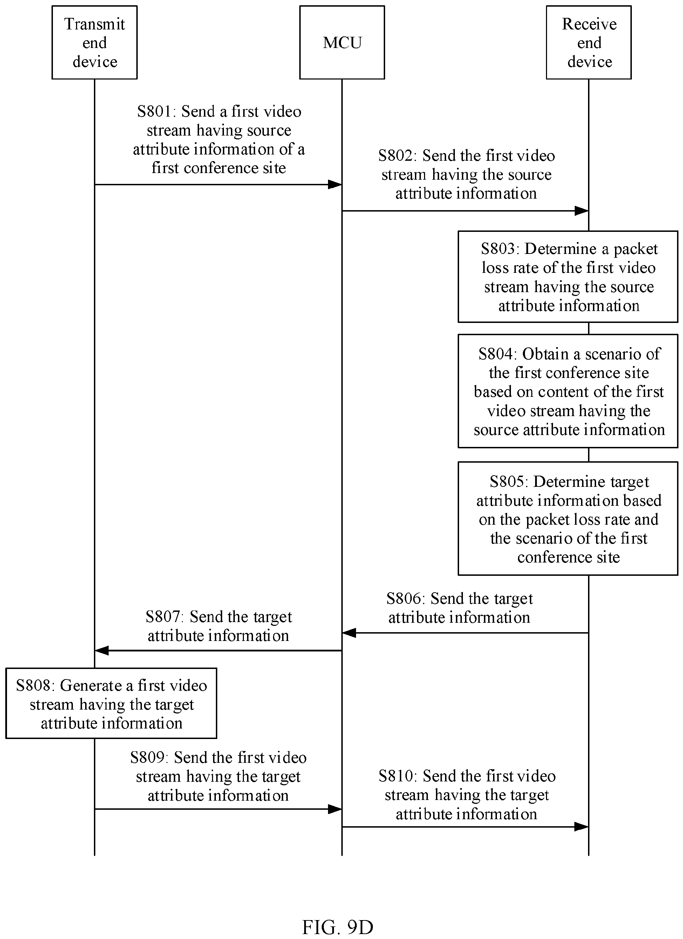

FIG. 9D is a schematic interaction diagram of a method for adjusting an attribute of a video stream according to an embodiment of this application. The method shown in FIG. 9C may include the following steps.

For S801 to S803, refer to S601 to S603.

S804: The receive end device determines a scenario of a first conference site based on image content of the first video stream having the source attribute information.

S805: The receive end device determines target attribute information based on the packet loss rate of the first video stream having the source attribute information and the scenario of the first conference site.

S806: The receive end device sends the target attribute information to an MCU.

For S807 to S810, refer to S607 to S610.

Embodiment 1 to Embodiment 6 may be applied to a conference television system in which a terminal accesses an MCU, as shown in the conference television systems in FIG. 1 to FIG. 3. The following describes a method for adjusting an attribute of a video stream in a conference television system in which a terminal does not access an MCU. A new embodiment obtained by replacing the MCU in Embodiment 1 and Embodiment 2 with the receive end device may be applied to a conference television system in which a terminal does not access an MCU, as shown in the conference television system in FIG. 4. In addition, this application further provides the following Embodiment 7 and Embodiment 8.

### Embodiment 7

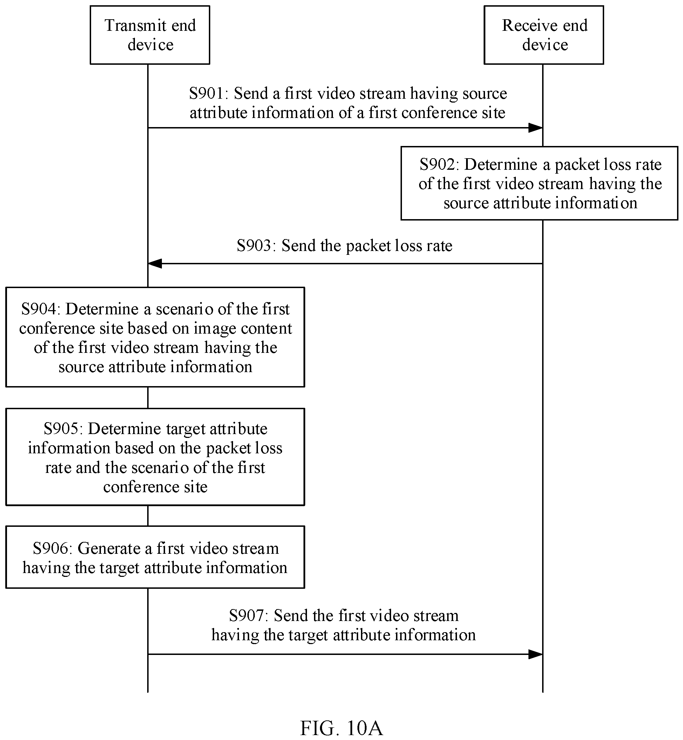

FIG. 10A is a schematic interaction diagram of a method for adjusting an attribute of a video stream according to an embodiment of this application. The method shown in FIG. 10A may include the following steps.

S901: A transmit end device sends a first video stream having source attribute information of a first conference site to a receive end device.

S902: The receive end device determines a packet loss rate of the received first video stream having the source attribute information.

S903: The receive end device sends the packet loss rate of the first video stream having the source attribute information to the transmit end device.

S904: The transmit end device determines a scenario of the first conference site based on image content of the first video stream having the source attribute information.

S905: The transmit end device determines target attribute information based on the packet loss rate of the first video stream having the source attribute information and the scenario of the first conference site.

S906: The transmit end device sends a first video stream having the target attribute information to the receive end device.

### Embodiment 8

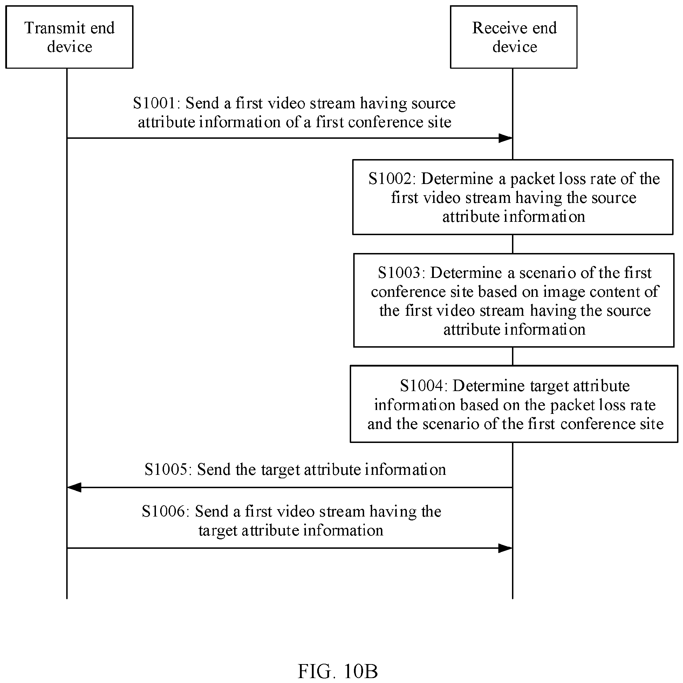

FIG. 10B is a schematic interaction diagram of a method for adjusting an attribute of a video stream according to an embodiment of this application. The method shown in FIG. 10B may include the following steps.

S1001: A transmit end device sends a first video stream having source attribute information to a receive end device.

S1002: The receive end device determines a packet loss rate of the received first video stream having the source attribute information.

S1003: The receive end device determines a scenario of a first conference site based on image content of the first video stream having the source attribute information.

S1004: The receive end device determines target attribute information based on the packet loss rate of the first video stream having the source attribute information and the scenario of the first conference site.

S1005: The receive end device sends the target attribute information to the transmit end device.

S1006: The transmit end device sends a first video stream having the target attribute information to the receive end device.

In addition, the foregoing embodiments are described by using an example in which an attribute adjustment apparatus is a terminal or an MCU. In some embodiments, the attribute adjustment apparatus may be an apparatus connected to both a transmit end device and an MCU. The apparatus is configured to: adjust attribute information of the first video stream sent by the transmit end device to the target attribute information, and send the first video stream having the target attribute information to the MCU. In these embodiments, a method for determining attribute information of a video stream by the transmit end device may not be changed.

Based on any one of the foregoing described embodiments, the following describes specific implementation of the target attribute information.

In an implementation, when the target resolution is different from resolution of a current video stream (for example, the first video stream having the source attribute information in Embodiment 1, 2, 4, 6, 7, or 8, or the converted first video stream in Embodiment 3 or 5), the target attribute information includes the target resolution. When the target frame rate is different from a frame rate of a current video conference, the target attribute information includes the target frame rate.

In another implementation, regardless of whether the target resolution is the same as the resolution of the current video stream (a specific example is the same as that described above), and regardless of whether the target frame rate is the same as the frame rate of the current video stream, the target attribute information includes the target resolution and the target frame rate.

Further, based on either of the two implementations, the target attribute information may include adjusted bandwidth. A type of signaling in which the target attribute information is carried for transmission is not limited in this embodiment of this application. For example, in the original H323 protocol, the H245 command (flow control command 4) is used to send the adjusted bandwidth. Specifically, the original session initiation protocol (session initiation protocol, SIP) uses a temporary maximum media bit-rate request/temporary maximum media bit-rate notification (temporary maximum media bit-rate request/temporary maximum media bit-rate notification, TMMBR/TMMBN) signaling defined in a standard protocol to send the adjusted bandwidth. In an embodiment of this application, the TMMBR/TMMBN signaling may still be used to carry the target attribute information.

The following uses an example to describe improvement of the TMMBR/TMMBN signaling in this embodiment of this application.

The original TMMBR/TMMBN signaling includes a bandwidth field and an SSRC (synchronization source) field. For example, TMMBR = {bandwidth, SSRC}, TMMBN = {bandwidth, SSRC}.

In this embodiment of this application, a resolution field and a frame rate field may be added to the TMMBR/TMMBN signaling. For example, TMMBR = {bandwidth, SSRC, resolution, frame rate}, TMMBN = {bandwidth, SSRC, resolution, frame rate}.

The foregoing mainly describes the solutions provided in embodiments of this application from a perspective of the methods. To implement the foregoing functions, corresponding hardware structures and/or software modules for performing the functions are included. A person skilled in the art should be easily aware that units and algorithm steps in the examples described with reference to embodiments disclosed in this specification can be implemented in a form of hardware or in a form of a combination of hardware and computer software in this application. Whether a function is implemented by hardware or hardware driven by computer software depends on a particular application and a design constraint condition of the technical solutions. A person skilled in the art may use a different method to implement the described functions for each particular application, but it should not be considered that the implementation goes beyond the scope of this application.

In embodiments of this application, the attribute adjustment apparatus may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that module division in this embodiment of this application is an example and is merely logical function division. During actual implementation, there may be another division manner.

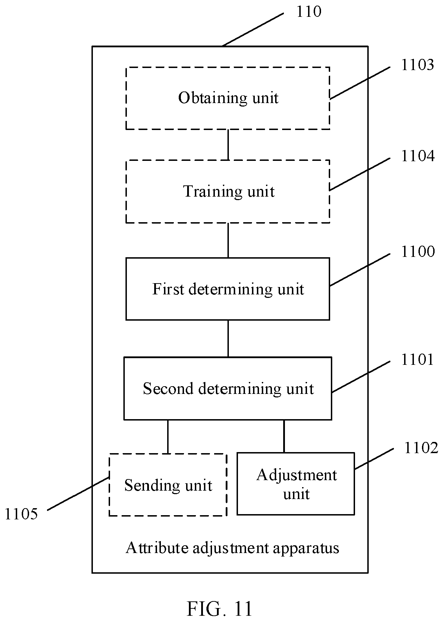

FIG. 11 is a schematic diagram of a structure of an attribute adjustment apparatus 110 according to an embodiment of this application. The attribute adjustment apparatus 110 may be configured to perform the foregoing steps performed by the attribute adjustment apparatus or the computer device. The attribute adjustment apparatus 110 includes: a first determining unit 1100, a second determining unit 1101, and an adjustment unit 1102. The first determining unit 1100 is configured to determine a scenario of a first conference site based on image content of a first video stream of the first conference site. The second determining unit 1101 is configured to determine target attribute information of the first video stream based on a packet loss rate of the first video stream and the scenario of the first conference site. The target attribute information includes at least one of target resolution and a target frame rate. The adjustment unit 1102 is configured to adjust attribute information of the first video stream to the target attribute information. For example, with reference to FIG. 7, the first determining unit 1100 may be configured to perform S201, the second determining unit 1101 may be configured to perform S202, and the adjustment unit 1103 may be configured to perform S203.

Optionally, the first determining unit 1100 is specifically configured to determine the scenario of the first conference site based on the image content of the first video stream and a scenario model. The scenario model is used to represent a correspondence between image content of a video stream and a scenario to which the video stream belongs. For example, with reference to FIG. 7, the first determining unit 1100 may be configured to perform S201.

Optionally, as shown in FIG. 11, the attribute adjustment apparatus 110 further includes: an obtaining unit 1103, configured to obtain an image of a video stream in at least one candidate scenario; and a training unit 1104, configured to train the image of the video stream in the at least one candidate scenario to obtain the scenario model, where the at least one candidate scenario includes the scenario of the first conference site. For example, with reference to FIG. 6, the obtaining unit 1103 may be configured to perform the steps performed by the computer device in S101, and the training unit 1104 may be configured to perform the steps performed by the computer device in S102.

Optionally, the second determining unit 1101 is specifically configured to: when the packet loss rate of the first video stream is greater than or equal to a first preset threshold, determine the target attribute information of the first video stream based on the scenario of the first conference site.

Optionally, the second determining unit 1101 is specifically configured to: when the scenario of the first conference site is a fixed conference room scenario, decrease current resolution of the first video stream to obtain the target resolution, and decrease a current frame rate of the first video stream to obtain the target frame rate; or when the scenario of the first conference site is an outdoor scenario, decrease current resolution of the first video stream to obtain the target resolution, and use a current frame rate of the first video stream as the target frame rate; or when the scenario of the first conference site is a PC desktop scenario, decrease a current frame rate of the first video stream to obtain the target frame rate, and use current resolution of the first video stream as the target resolution; or when the scenario of the first conference site is a mobile scenario, use current resolution of the first video stream as the target resolution, and use a current frame rate of the first video stream as the target frame rate.

Optionally, the second determining unit 1101 is specifically configured to: when the packet loss rate of the first video stream is less than or equal to a second preset threshold, determine the target attribute information of the first video stream based on the scenario of the first conference site.

Optionally, the second determining unit 1101 is specifically configured to: when the scenario of the first conference site is a fixed conference room scenario, increase current resolution of the first video stream to obtain the target resolution, and decrease a current frame rate of the first video stream to obtain the target frame rate; or when the scenario of the first conference site is an outdoor scenario, increase current resolution of the first video stream to obtain the target resolution, and use a current frame rate of the first video stream as the target frame rate; or when the scenario of the first conference site is a PC desktop scenario, increase a current frame rate of the first video stream to obtain the target frame rate, and use current resolution of the first video stream as the target resolution; or when the scenario of the first conference site is a mobile scenario, use current resolution of the first video stream as the target resolution, and use a current frame rate of the first video stream as the target frame rate.

Optionally, as shown in FIG. 11, the attribute adjustment apparatus 110 further includes: a sending unit 1105, configured to send the target attribute information to a terminal at the first conference site. The target attribute information is used to indicate the terminal to send the first video stream based on the target attribute information. In an example, with reference to FIG. 5, functions of the first determining unit 1100, the second determining unit 1101, the adjustment unit 1102, the obtaining unit 1103, and the training unit 1104 may be implemented by the processor 401 in FIG. 5 by running the computer instructions in the memory 403. The sending unit 1105 may be implemented by using the communications interface 404 in FIG. 5.

For explanations of related content, descriptions of beneficial effects, and the like in any attribute adjustment apparatus 110 provided above, refer to the foregoing corresponding method embodiments. Details are not described herein again. All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer-executable instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of a plurality. A single processor or another unit may implement several functions enumerated in the claims. Some measures are recorded in dependent claims that are different from each other, but this does not mean that the measures cannot be combined to produce a good effect.

Although this application is described with reference to specific features and embodiments thereof, it is clearly that various modifications and combinations may be made to them without departing from the spirit and scope of this application. Correspondingly, the specification and accompanying drawings are merely example descriptions of this application defined by the appended claims, and are considered as any of and all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. A method for adjusting an attribute of a video stream, wherein the method comprises:
determining, by an attribute adjustment apparatus, a scenario of a first conference site based on image content of a first video stream of the first conference site;
determining, by the attribute adjustment apparatus, target attribute information of the first video stream based on a packet loss rate of the first video stream and the scenario of the first conference site, wherein the target attribute information comprises at least one of target resolution and a target frame rate; and
adjusting, by the attribute adjustment apparatus, attribute information of the first video stream to the target attribute information.

2. The method according to claim 1, wherein the determining, by an attribute adjustment apparatus, a scenario of a first conference site based on image content of a first video stream of the first conference site comprises:
determining, by the attribute adjustment apparatus, the scenario of the first conference site based on the image content of the first video stream and a scenario model, wherein the scenario model is used to represent a correspondence between image content of a video stream and a scenario to which the video stream belongs.

3. The method according to claim 2, wherein the method further comprises:
obtaining, by the attribute adjustment apparatus, an image of a video stream in at least one candidate scenario; and
training, by the attribute adjustment apparatus, the image of the video stream in the at least one candidate scenario to obtain the scenario model, wherein the at least one candidate scenario comprises the scenario of the first conference site.

4. The method according to any one of claims 1 to 3, wherein the determining, by the attribute adjustment apparatus, target attribute information of the first video stream based on a packet loss rate of the first video stream and the scenario of the first conference site comprises:
when the packet loss rate of the first video stream is greater than or equal to a first preset threshold, determining, by the attribute adjustment apparatus, the target attribute information of the first video stream based on the scenario of the first conference site.

5. The method according to claim 4, wherein the determining, by the attribute adjustment apparatus, the target attribute information of the first video stream based on the scenario of the first conference site comprises:
when the scenario of the first conference site is a fixed conference room scenario, decreasing, by the attribute adjustment apparatus, current resolution of the first video stream to obtain the target resolution, and decreasing a current frame rate of the first video stream to obtain the target frame rate; or
when the scenario of the first conference site is an outdoor scenario, decreasing, by the attribute adjustment apparatus, current resolution of the first video stream to obtain the target resolution, and using a current frame rate of the first video stream as the target frame rate; or
when the scenario of the first conference site is a personal computer ,PC, desktop scenario, decreasing, by the attribute adjustment apparatus, a current frame rate of the first video stream to obtain the target frame rate, and using current resolution of the first video stream as the target resolution; or
when the scenario of the first conference site is a mobile scenario, using, by the attribute adjustment apparatus, current resolution of the first video stream as the target resolution, and using a current frame rate of the first video stream as the target frame rate.

6. The method according to any one of claims 1 to 3, wherein the determining, by the attribute adjustment apparatus, target attribute information of the first video stream based on a packet loss rate of the first video stream and the scenario of the first conference site comprises:
when the packet loss rate of the first video stream is less than or equal to a second preset threshold, determining, by the attribute adjustment apparatus, the target attribute information of the first video stream based on the scenario of the first conference site.

7. The method according to claim 6, wherein the determining, by the attribute adjustment apparatus, the target attribute information of the first video stream based on the scenario of the first conference site comprises:
when the scenario of the first conference site is a fixed conference room scenario, increasing, by the attribute adjustment apparatus, current resolution of the first video stream to obtain the target resolution, and decreasing a current frame rate of the first video stream to obtain the target frame rate; or
when the scenario of the first conference site is an outdoor scenario, increasing, by the attribute adjustment apparatus, current resolution of the first video stream to obtain the target resolution, and using a current frame rate of the first video stream as the target frame rate; or
when the scenario of the first conference site is a PC desktop scenario, increasing, by the attribute adjustment apparatus, a current frame rate of the first video stream to obtain the target frame rate, and using current resolution of the first video stream as the target resolution; or
when the scenario of the first conference site is a mobile scenario, using, by the attribute adjustment apparatus, current resolution of the first video stream as the target resolution, and using a current frame rate of the first video stream as the target frame rate.

8. The method according to any one of claims 1 to 7, wherein the adjusting, by the attribute adjustment apparatus, attribute information of the first video stream to the target attribute information comprises:
when the attribute adjustment apparatus is a device other than a terminal at the first conference site, sending, by the attribute adjustment apparatus, the target attribute information to the terminal at the first conference site, wherein the target attribute information is used to indicate the terminal to send the first video stream based on the target attribute information.

9. An attribute adjustment apparatus, wherein the apparatus comprises:
a first determining unit, configured to determine a scenario of a first conference site based on image content of a first video stream of the first conference site;
a second determining unit, configured to determine target attribute information of the first video stream based on a packet loss rate of the first video stream and the scenario of the first conference site, wherein the target attribute information comprises at least one of target resolution and a target frame rate; and
an adjustment unit, configured to adjust attribute information of the first video stream to the target attribute information.

10. The apparatus according to claim 9, wherein
the first determining unit is specifically configured to determine the scenario of the first conference site based on the image content of the first video stream and a scenario model, wherein the scenario model is used to represent a correspondence between image content of a video stream and a scenario to which the video stream belongs.

11. The apparatus according to claim 10, wherein the apparatus further comprises:
an obtaining unit, configured to obtain an image of a video stream in at least one candidate scenario; and
a training unit, configured to train the image of the video stream in the at least one candidate scenario to obtain the scenario model, wherein the at least one candidate scenario comprises the scenario of the first conference site.

12. The apparatus according to any one of claims 9 to 11, wherein
the second determining unit is specifically configured to: when the packet loss rate of the first video stream is greater than or equal to a first preset threshold, determine the target attribute information of the first video stream based on the scenario of the first conference site.

13. The apparatus according to claim 12, wherein the second determining unit is specifically configured to:
when the scenario of the first conference site is a fixed conference room scenario, decrease current resolution of the first video stream to obtain the target resolution, and decrease a current frame rate of the first video stream to obtain the target frame rate; or
when the scenario of the first conference site is an outdoor scenario, decrease current resolution of the first video stream to obtain the target resolution, and use a current frame rate of the first video stream as the target frame rate; or
when the scenario of the first conference site is a personal computer PC desktop scenario, decrease a current frame rate of the first video stream to obtain the target frame rate, and use current resolution of the first video stream as the target resolution; or
when the scenario of the first conference site is a mobile scenario, use current resolution of the first video stream as the target resolution, and use a current frame rate of the first video stream as the target frame rate.

14. The apparatus according to any one of claims 9 to 11, wherein
the second determining unit is specifically configured to: when the packet loss rate of the first video stream is less than or equal to a second preset threshold, determine the target attribute information of the first video stream based on the scenario of the first conference site.

15. The apparatus according to claim 14, wherein the second determining unit is specifically configured to:
when the scenario of the first conference site is a fixed conference room scenario, increase current resolution of the first video stream to obtain the target resolution, and decrease a current frame rate of the first video stream to obtain the target frame rate; or
when the scenario of the first conference site is an outdoor scenario, increase current resolution of the first video stream to obtain the target resolution, and use a current frame rate of the first video stream as the target frame rate; or
when the scenario of the first conference site is a PC desktop scenario, increase a current frame rate of the first video stream to obtain the target frame rate, and use current resolution of the first video stream as the target resolution; or
when the scenario of the first conference site is a mobile scenario, use current resolution of the first video stream as the target resolution, and use a current frame rate of the first video stream as the target frame rate.

16. The apparatus according to any one of claims 9 to 15, wherein the apparatus further comprises:
a sending unit, configured to: when the attribute adjustment apparatus is a device other than a terminal at the first conference site, send the target attribute information to the terminal at the first conference site, wherein the target attribute information is used to indicate the terminal to send the first video stream based on the target attribute information.

17. An attribute adjustment apparatus, comprising a memory and a processor, wherein the memory is configured to store computer instructions, and the processor is configured to invoke the computer instructions to perform the method according to any one of claims 1 to 8.

18. A computer-readable storage medium, comprising computer instructions, wherein when the computer instructions are run on a computer, the method according to any one of claims 1 to 8 is performed.
